# EUROPÄISCHE PATENTANMELDUNG

(11) **EP 0 657 816 A1**
(43) Veröffentlichungstag der Anmeldung: **14.06.1995**
(21) Anmeldenummer: 94118360.0
(22) Anmeldetag: 22.11.1994
(51) Int. Cl.: G06F 11/22, G06F 11/32

(54) **Rechner mit einer Statusanzeigeeinheit**

(30) Priorität: 13.12.1993 DE 9319124 U
(71) Anmelder: SIEMENS AKTIENGESELLSCHAFT, D-80333 München (DE)
(72) Erfinder: Trauth, Armin, D-76829 Landau (DE)

(57) **Zusammenfassung**

Es wird ein Rechner, insbesondere ein Personalcomputer, mit einer Statusanzeigeeinheit zur Anzeige von Statusmeldungen mit einer verbesserten Fehleranalyse nach einem Rechnerausfall vorgeschlagen. Dazu ist der Rechner mit einer gepufferten Statusüberwachungseinheit (2) versehen, welche mehrere Statusmeldungen entsprechend der zeitlichen Reihenfolge ihrer Erfassung kennzeichnet und speichert, und für den Fall eines Rechnerausfalls zeigt die Statusüberwachungseinheit (2) in einer manuellen oder automatischen Betriebsart die Statusmeldungen über die Statusanzeigeeinheit (3) an.

Die Erfindung wird angewandt in Personalcomputern.

## Beschreibung

Die Erfindung betrifft einen Rechner, insbesondere einen Personalcomputer, mit einer Statusanzeigeeinheit zur Anzeige von Statusmeldungen.

Es kann vorkommen, daß Rechner durch Software- und/oder Hardware-Fehler einen undefinierten Zustand einnehmen. In diesem Zustand arbeitet der Rechner nicht ordnungsgemäß, und es ist nicht mehr möglich, den Rechner über die Tastatur zu bedienen, was insbesondere beim Einsatz des Rechners in der Prozeßautomatisierung unerwünscht ist.
Aus dem Siemens-Katalog IPC 10, Ausgabe 1992, ist ein Rechner in Form eines Industrie-PC's bekannt, welcher eine zweistellige Sieben-Segment-Anzeige aufweist, auf der softwaregesteuert Statusmeldungen ausgegeben werden. Die vor einem "Absturz" des Rechners angezeigte Statusmeldung bleibt nach dem Absturz lesbar und kann zur Ermittlung der Fehlerursache herangezogen werden.
Um die Fehlerursache möglichst schnell zu analysieren oder wenigstens einzugrenzen, reicht gewöhnlich die Anzeige einer einzigen Statusmeldung nicht aus. Vielmehr ist es für eine Analyse erforderlich, mehrere ursächlich zusammenhängende Statusmeldungen zu kennen.

Der vorliegenden Erfindung liegt die Aufgabe zugrunde, einen Rechner der eingangs genannten Art mit einer verbesserten Fehleranalyse nach einem Rechnerausfall anzugeben.

Diese Aufgabe wird dadurch gelöst, daß eine gepufferte Statusüberwachungseinheit vorgesehen ist, welche mehrere Statusmeldungen entsprechend der zeitlichen Reihenfolge ihrer Erfassung kennzeichnet und speichert, und daß die Statusüberwachungseinheit für den Fall eines Rechnerausfalls in einer manuellen oder automatischen Betriebsart die Statusmeldungen über die Statusanzeigeeinheit anzeigt.

Weitere vorteilhafte Ausgestaltungen der Erfindung ergeben sich aus den Unteransprüchen.

Eine Kennzeichnung von Anzeigen zusammenhängender Zustandsänderungen entsprechend der zeitlichen Reihenfolge ihrer Erfassung ist aus dem deutschen Gebrauchsmuster G 92 01 842.4 bekannt. Die Darstellung der Zustandsanzeigen erfolgt in der Weise, daß beim Drücken einer Funktionstaste der Tastatur die älteste Zustandsanzeige in einer dafür vorgesehenen Farbdarstellung auf einem Bildschirm angezeigt wird und ein weiterer Tastendruck eine Umschaltung auf die zweitälteste in einer anderen Farbdarstellung usw. bewirkt. Mit jedem Tastendruck wird jeweils zur nächst jüngeren fortgeschaltet, und nach Erreichen der jüngsten Zustandsanzeige wird wieder auf die älteste gewechselt. Es ist auch möglich, ausgehend von der jüngsten Zustandsanzeige, nach und nach zur ältesten Zustandsanzeige zu schalten. Ein Fortschalten der Kennzeichnung kann auch automatisch, d. h. ohne Tastaturbedienung des Benutzers, erfolgen.

Die bekannte Vorrichtung dient zum Erfassen und Darstellen von Zustandsänderungen während des Betriebs und hat keinen Bezug zu einem Rechner, auf den sich die Erfindung bezieht.

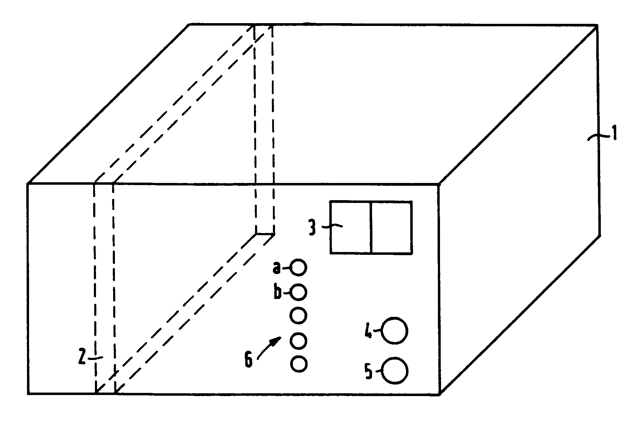

Anhand eines in der Zeichnung dargestellten Ausführungsbeispiels werden die Erfindung sowie deren Ausgestaltungen und Vorteile näher erläutert.

Eine Systemeinheit 1 eines Rechners, z. B. eines Personalcomputers, ist mit einer Statusüberwachungseinheit 2 versehen, die bei einem Rechnerausfall weiterhin funktionsfähig ist. Über geeignete Anschlüsse ist die Statusüberwachungseinheit 2 mit einer Statusanzeigeeinheit 3, einem KEYLOCK-Schalter 4, einem RESET-Schalter 5 sowie einer LED-Funktionsanzeige 6 verbunden. Die Statusüberwachungseinheit 2 ist als steckbare Baugruppe ausgebildet und zusammen mit anderen Baugruppen des Rechners, z. B. mit einer CPU-Baugruppe, einer Kommunikationsbaugruppe sowie Speicherbaugruppen, in eine mit entsprechenden Steckplätzen versehene, Adreß-, Daten- und Steuerleitungen aufweisende Busplatine des Rechners gesteckt. Die Statusanzeigeeinheit 3 dient zur Anzeige von Statusmeldungen. Die LED-Funktionsanzeige 6 zeigt z. B. im Normalbetrieb an, ob der Rechner eingeschaltet, ob die zulässige Innentemperatur des Rechners überschritten oder ob gerade ein entsprechendes Programm durch die CPU-Baugruppe in Bearbeitung ist. Mit dem KEYLOCK-Schalter 4 ist es möglich, Rechnereingaben über eine hier nicht dargestellte Tastatur zu sperren, und mit dem RESET-Schalter 5 kann der Rechner in einen definierten Anfangszustand zurückgesetzt werden. Weitere Bestandteile des Rechners, wie Speicherlaufwerke oder ein Bildschirm, sind für die Erfindung ohne Bedeutung und brauchen nicht näher erläutert zu werden.
Es ist angenommen, daß die gepufferte Statusüberwachungseinheit 2 in ihrem Speicher mehrere Statusmeldungen hinterlegt, welche die Statusanzeigeeinheit 3 während des Betriebs des Rechners entsprechend der zeitlichen Reihenfolge ihres Auftretens anzeigt, und daß der Rechner aufgrund einer Störung ausfällt. Die Statusüberwachungseinheit 2 erkennt aufgrund eines Unterbrechungssignals auf einer Steuerleitung der Busplatine, daß der Rechner ausgefallen ist, und zeigt auf der zweistelligen Sieben-Segment-Anzeige der Statusanzeigeeinheit 3 die älteste Statusmeldung in Form einer zweistelligen Hexadezimalzahl an. Gleichzeitig deaktiviert die Statusüberwachungseinheit 2 die Normalfunktion der LED-Anzeige 6 und bewirkt, daß die erste LED a der LED-Funktionsanzeige 6 aufleuchtet, was darauf hinweist, daß die dargestellte Statusmeldung die älteste ist. Nach einer voreingestellten Darstellungszeit dieser Statusmeldung bringt die Statusüberwachungseinheit 2 die zweitälteste Statusmeldung zur Anzeige auf der Statusanzeigeeinheit 3, was dem Bediener durch das Aufleuchten der zweiten LED b der LED-Funktionsanzeige 6 angezeigt wird.

Im dargestellten Ausführungsbeispiel sind lediglich fünf LED's zur Anzeige der zeitlichen Reihenfolge der Erfassung von fünf Statusmeldungen dargestellt. Selbstverständlich ist es möglich, weitere LED's zur Kennzeichnung weiterer Statusmeldungen vorzusehen. Die Anzahl der darstellbaren Statusmeldungen und die Dauer der Darstellungszeit der einzelnen Statusmeldungen auf der Statusanzeigeeinheit 3 ist parametrierbar. Die Parametrierung des entsprechenden Treiberprogramms auf der Statusüberwachungseinheit 2 geschieht vor Beginn des Rechnerbetriebs.
Die Darstellungsreihenfolge, ob die Statusmeldungen von der ältesten bis zur jüngsten oder von der jüngsten bis zur ältesten erfaßten Statusmeldung angezeigt werden, ist ebenfalls parametrierbar. Weiterhin kann vorgegeben werden, daß die Statusüberwachungseinheit 2 die Statusmeldungen nicht automatisch, sondern manuell gesteuert anzeigt. Wird nach einem Rechnerausfall der KEYLOCK-Schalter 4 betätigt, so deaktiviert zunächst die Statusüberwachungseinheit 2 den RESET-Schalter 5 im Hinblick auf dessen Normalfunktion, d. h., in dieser Betriebsart kann durch den RESET-Schalter 5 der Rechner nicht mehr zum Rücksetzen in einen definierten Anfangszustand gebraucht werden. Statt dessen werden mit jeder Betätigung dieses Schalters 5 die Statusmeldungen von der ältesten bis zur jüngsten oder entsprechend der Parametrierung von der jüngsten bis zur ältesten erfaßten Statusmeldung fortgeschaltet und angezeigt.
Im Beispiel sind zur Darstellung der Statusanzeige, zur Kennzeichnung der zeitlichen Reihenfolge und zum Weiterschalten der Statusmeldungen in der manuellen Betriebsart Standardelemente des Rechners vorgesehen. Selbstverständlich ist es möglich, eigens dafür vorgesehene Mittel für den Rechner bereitzustellen, was allerdings einen Fertigungsmehraufwand bedeutet.

## Patentansprüche

1. Rechner, insbesondere Personalcomputer, mit einer Statusanzeigeeinheit (3) zur Anzeige von Statusmeldungen, **dadurch gekennzeichnet,**
- daß eine gepufferte Statusüberwachungseinheit (2) vorgesehen ist, welche mehrere Statusmeldungen entsprechend der zeitlichen Reihenfolge ihrer Erfassung kennzeichnet und speichert, und
- daß die Statusüberwachungseinheit (2) für den Fall eines Rechnerausfalls in einer manuellen oder automatischen Betriebsart die Statusmeldungen über die Statusanzeigeeinheit (3) anzeigt.

2. Rechner nach Anspruch 1, **dadurch gekennzeichnet,**
- daß die Statusmeldungen von der ältesten bis zur jüngsten oder von der jüngsten bis zur ältesten erfaßten Statusmeldung fortgeschaltet und angezeigt werden.

3. Rechner nach Anspruch 2, **dadurch gekennzeichnet,**
- daß für die manuelle Betriebsart ein erstes und ein zweites mit der Statusüberwachungseinheit (2) verbundenes Standardbedienelement des Rechners, vorzugsweise der KEYLOCK- und RESET-Schalter (4, 5), vorgesehen sind, wobei die Statusüberwachungseinheit (2) beim Betätigen des ersten Bedienelementes das zweite Bedienelement aktiviert, wodurch beim Betätigen des zweiten Bedienelementes die Statusüberwachungseinheit (2) die Anzeige fortschaltet.
